# FASCICULE DE BREVET EUROPEEN

(11) **EP 3 692 289 B1**
(45) Date de publication et mention de la délivrance du brevet: **29.09.2021**
(21) Numéro de dépôt: 18779739.4
(22) Date de dépôt: 02.08.2018
(51) Int. Cl.: F16K 35/02, F16K 31/60, F17C 13/04, F16K 1/30, F16K 35/14, F16K 1/44, F16K 31/524

(54) **ROBINET ET DISPOSITIF DE STOCKAGE ET DE DISTRIBUTION DE FLUIDE SOUS PRESSION**
VENTIL UND VORRICHTUNG ZUM SPEICHERN UND ABGEBEN VON UNTER DRUCK STEHENDEM FLUID
VALVE AND DEVICE FOR STORING AND DISPENSING PRESSURIZED FLUID

(30) Priorité: 05.10.2017 FR 1701024; 05.10.2017 FR 1701025
(43) Date de publication de la demande: 12.08.2020
(73) Titulaire: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Inventeur: VIGNEROL, Samuel, 78330 Fontenay Le Fleury (FR); FRENAL, Antoine, 95460 Ezanville (FR); MULLER, Denis, 92500 Rueil Malmaison (FR); PAOLI, Hervé, 92500 Rueil-Malmaison (FR); ONDO, Olivier, 91120 Palaiseau (FR); LAMIABLE, Morgan, 57940 Metzervisse (FR); BROECHLER, Johan, 54190 Villerupt (FR); DI FILIPPO, Claudio, 57645 Noisseville (FR)
(74) Mandataire: Air Liquide
(86) Numéro de dépôt international: PCT/FR2018/051995
(87) Numéro de publication internationale: WO 2019/068971

(56) Documents cités:
- FR-A1- 2 793 297
- FR-A1- 2 840 664
- FR-A1- 2 974 402
- FR-A3- 2 790 299
- US-A- 1 944 456

## Description

L'invention concerne un robinet et un dispositif de stockage et de distribution de fluide sous pression.

L'invention concerne plus particulièrement un robinet pour fluide sous pression comprenant un corps ayant une face avant et une face arrière et abritant un circuit interne de fluide ayant une extrémité amont destinée à être mise en relation avec une réserve de fluide sous pression et extrémité aval destinée à être mise en relation avec un utilisateur de fluide, le circuit comprenant un ensemble de clapet(s) comprenant au moins un clapet d'obturation permettant de fermer ou d'ouvrir le circuit, le robinet comprend un levier de commande de l'ensemble de clapet(s) comprenant une extrémité de préhension, notamment terminale, le levier de commande étant monté mobile en rotation sur robinet entre une position de repos dans laquelle le levier de commande est disposé le long ou en vis-à-vis de la face avant du corps du robinet et dans laquelle l'ensemble de clapet(s) est disposé dans une position de fermeture du circuit et une position active dans laquelle le levier de commande est écarté du corps du robinet et actionne l'ensemble de clapet(s) dans une position d'ouverture du circuit selon une première section d'ouverture, le robinet comportant un mécanisme de verrouillage du levier de commande dans sa position de repos, le mécanisme de verrouillage comprenant levier de verrouillage muni d'une extrémité (29) de préhension notamment terminale, le levier de verrouillage étant mobile en rotation sur le robinet entre une première position de verrouillage et une seconde position de déverrouillage.

Pour des raisons de sécurité, il est connu de prévoir un mécanisme de verrouillage de l'organe de commande manuelle de l'ouverture d'un clapet d'isolation d'un robinet de bouteille(s) de gaz sous pression (cf. par exemple FR2793297A1).

Lors du transport, d'une chute ou de la manutention de la bouteille munie d'un tel robinet, un objet saillant (axe rectiligne ou autre) peut actionner ce mécanisme qui déverrouille l'organe de commande. Ce déplacement intempestif de l'organe de verrouillage/déverrouillage est d'autant plus dangereux lorsque son actionnement permet une préouverture du robinet pour libérer du gaz avant même le déplacement de l'organe de commande.

Pour éviter un actionnement intempestif la manipulation du mécanisme de verrouillage peut être rendue plus complexe. Cependant, cela peut nuire à l'ergonomie d'utilisation du robinet. FR2790299 décrit un robinet selon le préambule de la revendication 1.

Un but de la présente invention est de pallier tout ou partie des inconvénients de l'art antérieur relevés ci-dessus.

A cette fin, selon l'invention, dans sa première position le levier de verrouillage est disposé le long ou en vis-à-vis de la face avant du corps du robinet et assure un verrouillage du levier de commande empêchant son déplacement de sa position de repos vers sa position active, dans sa seconde position le levier de verrouillage est plus écarté du corps du robinet et autorise le déplacement du levier de commande de sa position de repos vers sa position active, lorsque le levier de verrouillage est dans sa première position et que le levier de commande est dans sa position de repos, les extrémités de préhension du levier de commande et du levier d'actionnement sont disposées de façon adjacente le long ou en vis-à-vis de la face avant du corps du robinet, lorsque le levier de verrouillage est dans sa première position et que le levier de commande est dans sa position de repos, les extrémités de préhension du levier de commande et du levier de verrouillage sont décalées selon la direction avant/arrière du robinet, l'extrémité de préhension étant en retrait d'un écart déterminé vers l'arrière par rapport à l'extrémité de préhension du levier de commande, lorsque le levier de verrouillage est déplacé dans sa seconde position, son extrémité de préhension arrive au même niveau que l'extrémité de préhension du levier de commande selon la direction avant/arrière, et dans sa seconde position de déverrouillage, le levier de verrouillage actionne l'ensemble de clapet(s) dans une position d'ouverture du circuit selon une seconde section d'ouverture, la section d'ouverture étant différente et notamment inférieure à la première section d'ouverture.

Par ailleurs, des modes de réalisation de l'invention peuvent comporter l'une ou plusieurs des caractéristiques suivantes :
- lorsque le levier de verrouillage est dans sa première position et que le levier de commande est dans sa position de repos, les extrémités de préhension du levier de commande et du levier d'actionnement sont décalées latéralement et/ou verticalement l'une de l'autre sur la face avant du corps du robinet,
- l'écart est compris quelques millimètres à quelques centimètres, notamment compris entre 0,5 et 4cm,
- le levier de verrouillage est dans sa seconde position et que le levier de commande est déplacé vers sa position active, un mécanisme du robinet permet ou provoque le même déplacement du levier de verrouillage,
- le robinet comporte un mécanisme de couplage du déplacement du levier de commande et de l'actionneur lorsque le levier de commande est déplacé de sa position active vers sa position de repos et/ou de sa position de repos vers sa position active, le mécanisme de couplage déplaçant automatiquement l'actionneur lorsque le levier de commande est déplacé,
- dans la première position du levier de verrouillage, l'extrémité de préhension de ce levier de verrouillage est située à une première distance de la face avant du corps du robinet qui est comprise entre zéro et 4cm, notamment entre 1 et 3 cm,
- le levier de commande et le levier de verrouillage sont articulés autour d'axes de rotations respectifs distincts ou confondus,
- le levier de commande et le levier de verrouillage sont mobiles en rotation dans un même plan ou des plans adjacents parallèles,
- lorsque le levier de commande est dans sa position de repos et que le levier de verrouillage est dans la première position, une portion du levier de verrouillage est située entre la face avant du corps du robinet et une portion du levier de commande c'est-à-dire que, selon la direction avant/arrière du robinet, le levier de verrouillage est occulté partiellement par le levier de commande à l'exception de sa portion de préhension,
- l'ensemble de clapet(s) comporte deux clapets d'obturation distincts mobiles par rapport à des sièges respectifs et définissant en position d'ouverture respectivement les deux sections d'ouverture distinctes, les deux clapets étant commandés respectivement par le levier de commande et par l'actionneur,
- le robinet comporte un organe de rappel de l'actionneur vers sa première position de verrouillage,
- le robinet comporte un mécanisme de maintien stable du levier de commande au moins dans sa position active,
- les deux clapets d'obturation distincts sont disposés en série dans une même conduite du circuit,
- les deux clapets d'obturation sont commandés par au moins un axe-poussoir mobile commandé par le levier de commande et par l'actionneur,
- le déplacement de l'actionneur de sa première position de verrouillage vers sa seconde position de déverrouillage déplace le poussoir selon une première course actionnant l'ouverture d'un premier clapet(s) dans une position d'ouverture avec la seconde section d'ouverture du circuit, le déplacement ultérieur du levier de commande de sa position de repos vers sa position active déplace le poussoir selon une seconde course actionnant l'ouverture du second clapet dans une position d'ouverture du circuit avec la première section d'ouverture,
- le mécanisme de verrouillage du levier de commande dans sa position de repos comprend une butée mécanique mobile,
- le mécanisme de verrouillage du levier de commande dans sa position de repos agit sur une came solidaire du levier de commande,
- le mécanisme de verrouillage du levier de commande dans sa position de repos comprend une butée mécanique entre un profil de la came du levier de commande et un organe mobile d'un mécanisme de transmission de mouvement entre la came et l'ensemble de clapet(s),
- les deux leviers sont articulés sur le corps et comprennent chacun une came respective ayant un profil de came respectif et coopérant avec au moins un poussoir mobile de commande de l'ensemble de clapet(s) d'obturation.

L'invention concerne également un réservoir ou ensemble de réservoirs de fluide sous pression, notamment de gaz sous pression comprenant un robinet conforme à l'une quelconque des caractéristiques ci-dessus ou ci-après.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
- la figure 1 représente une vue en coupe, schématique et partielle, illustrant la structure et le fonctionnement d'un premier exemple de réalisation possible de l'invention,
- les figure 2 et 3 représentent des vues en coupe, schématiques et partielles, illustrant la structure et le fonctionnement d'un second exemple de réalisation possible de l'invention et selon respectivement deux configurations d'utilisation,
- la figure 4 représente une vue schématique et partielle illustrant un exemple de principe de fonctionnement possible et facultatif du robinet,
- la figure 5 représente une vue de la face avant, schématique et partielle, illustrant un autre exemple de réalisation d'un robinet selon l'invention,
- la figure 6 représente une vue de dessus, schématique et partiellement en coupe, du robinet de la figure 5 associé à un chapeau de protection,
- la figure 7 représente une vue de côté (latérale), schématique et partielle, du robinet de la figure 5,
- la figure 8 représente une vue de derrière, schématique et partielle, du robinet de la figure 5 monté sur un réservoir de gaz et protégé par un chapeau,
- la figure 9 représente une vue de derrière et partiellement de biais du robinet de la figure 5 monté sur son réservoir de gaz et protégé par son chapeau.
- le figure 10 représente de devant et de biais du robinet de la figure 5 monté sur son réservoir de gaz et protégé par son chapeau dans une configuration d'ouverture,
- la figure 11 représente une vue en coupe, schématique et partielle, illustrant la structure et le fonctionnement d'un autre exemple de réalisation possible de l'invention,
- la figure 12 représente une vue en coupe agrandie d'un détail de la figure 11.

Le robinet 1 illustré aux figures comprend classiquement un corps 2 abritant un circuit 3 de fluide ayant une extrémité amont 4 destinée à être mis en relation avec une réserve de fluide sous pression et extrémité aval 5 destinée à être mise en relation avec un utilisateur de fluide.

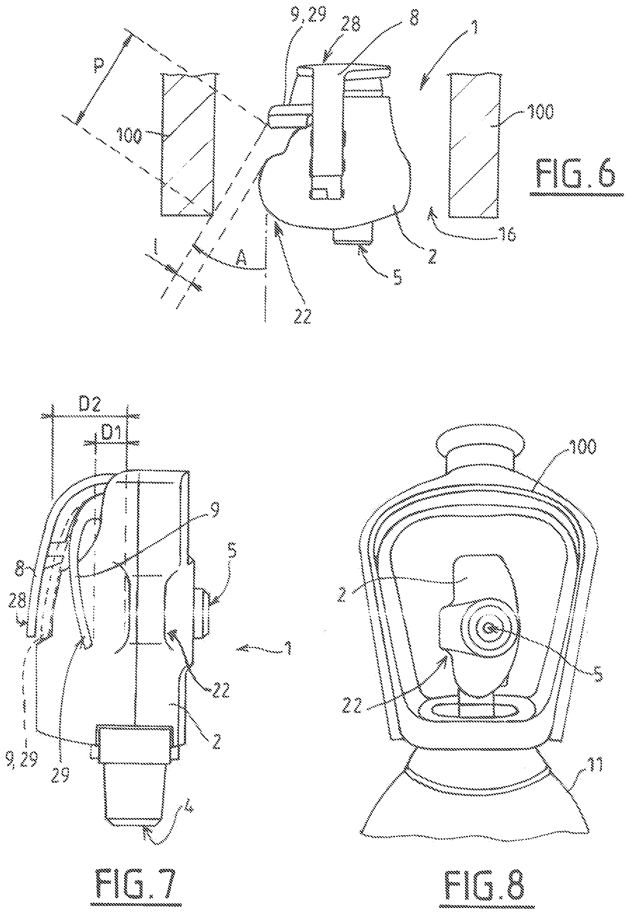

L'extrémité amont 4 peut être raccordée à une bouteille 11 de gaz sous pression (cf. figures 8 à 10) ou à une circuiterie reliée à une bouteille de gaz sous pression ou plusieurs bouteilles (cadre de bouteilles par exemple). A cet effet, l'extrémité correspondante du corps 2 du robinet 1 peut être filetée à son extrémité inférieure.

L'extrémité aval 5 débouche par exemple au niveau d'un raccord de sortie.

Le circuit 3 comprend un ensemble de clapet(s) comprenant au moins un clapet 6 d'obturation permettant de fermer ou d'ouvrir le circuit 3 (clapet d'isolation par exemple).

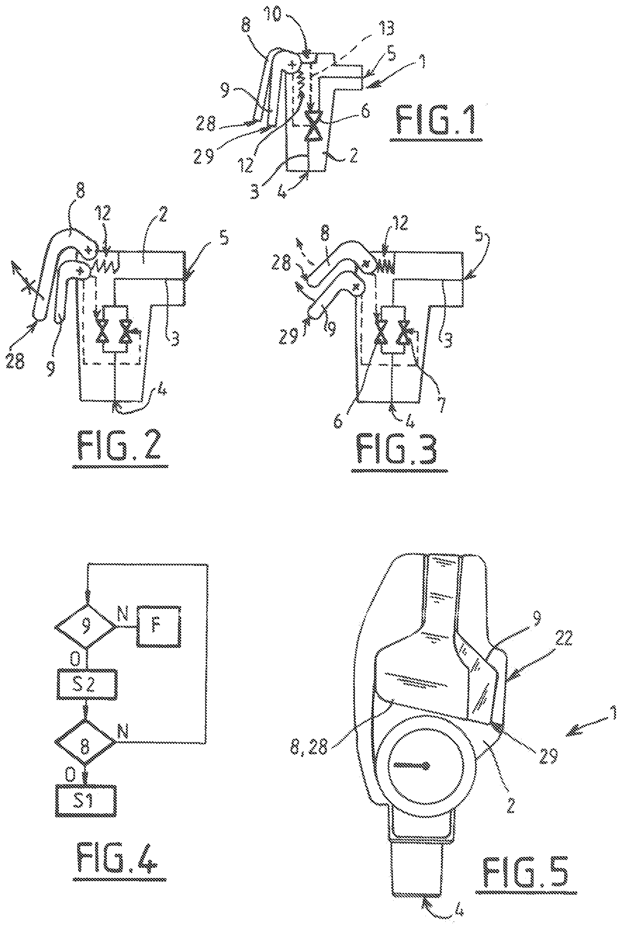

Le corps 2 du robinet comprend une face avant (cf. figure 5) et une face arrière (cf. figure 6) et des extrémités ou bords latéraux (cf. les extrémités latérales du robinet à la figure 5).

Le robinet 1 comprend un organe 8 de commande manuelle de l'ensemble de clapet(s) 6.

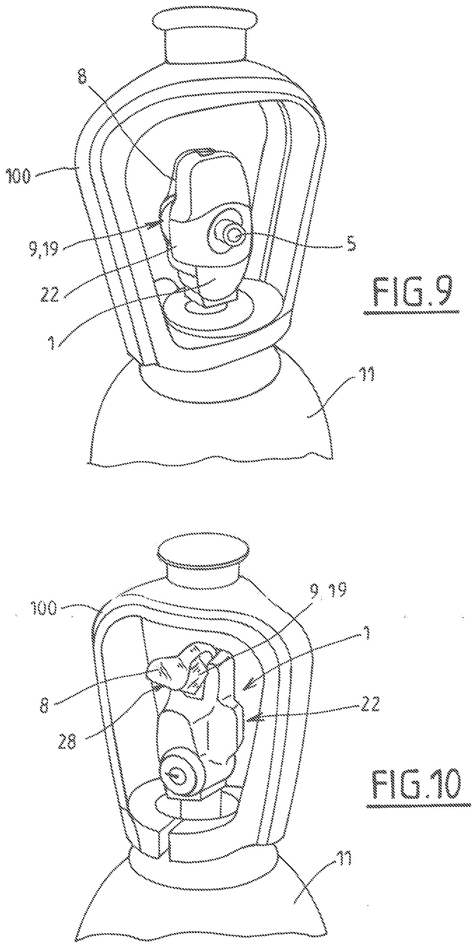

L'organe 8 de commande est de préférence un levier monté mobile en rotation sur le robinet 1 entre une position de repos (figures 1, 2, 3, 5, 6, 7 et 9) dans laquelle l'ensemble de clapet(s) 6 reste fermé (par exemple via un organe de rappel tel qu'un ressort) qui correspond à une fermeture du circuit 3 et une position active (cf. figures 3 et 10) dans laquelle l'organe 8 de commande actionne l'ensemble de clapet(s) 6 dans une position d'ouverture du circuit 3 selon une première section d'ouverture S1 (ouverture complète notamment).

Le levier 8 de commande comporte une extrémité 28 de préhension.

En position de repos, le levier 8 de commande est disposé le long ou en vis-à-vis de la face avant du corps 2 du robinet 1 et l'ensemble de clapet(s) 6, 7 est disposé dans une position de fermeture du circuit. Par exemple le levier 8 de commande possède une portion sensiblement rectiligne qui est en position sensiblement verticale en position de repos.

Dans sa position active, le levier 8 de commande est écarté du corps 2 du robinet et actionne l'ensemble de clapet(s) 6, 7 dans une position d'ouverture du circuit 3 selon une première section d'ouverture S1. Par exemple, en position active la portion sensiblement rectiligne du levier 8 est sensiblement horizontale et/ou situe en partie supérieure ou au-dessus du corps 2 du robinet 1.

Comme visible notamment aux figures 6, 7, 9 et 11, le raccord 5 de sortie peut être situé sur la face arrière du corps 2 du robinet 1.

Le robinet 1 comporte un mécanisme 9, 10 de verrouillage de l'organe 8 de commande dans sa position de repos.

Le mécanisme 9, 10 de verrouillage du levier 8 de commande dans sa position de repos comprend levier 9 de verrouillage muni d'une extrémité 29 de préhension notamment une extrémité terminale. Le levier 9 de verrouillage est mobile en rotation sur le robinet entre une première position de verrouillage (figure 2) et une seconde position de déverrouillage (figure 3).

Dans sa première position le levier 9 de verrouillage est de préférence disposé le long ou en vis-à-vis de la face avant du corps 2 du robinet 1 et assure un verrouillage du levier 8 de commande empêchant son déplacement de sa position de repos vers sa position active (par exemple via une butée 10).

Dans sa seconde position, le levier 9 de verrouillage est plus écarté du corps 2 du robinet et autorise le déplacement du levier 8 de commande de sa position de repos vers sa position active (la butée 10 est escamotée par exemple).

Comme illustré aux figures 5, 6 et 7 notamment, lorsque le levier 9 de verrouillage est dans sa première position et que le levier 8 de commande est dans sa position de repos, les extrémités terminales de préhension 28, 29 du levier 8 de commande et du levier 9 d'actionnement sont disposées de façon adjacente le long ou en vis-à-vis de la face avant du corps 2 du robinet.

Les extrémités terminales de préhension 28, 29 du levier 8 de commande et du levier 9 d'actionnement peuvent également être disposé au-dessus d'un afficheur (manomètre par exemple) cf. figure 5. De sorte que ces deux extrémités terminales 28, 29 des leviers en position de repos/verrouillage forment un « toit » ou rebord de protection au-dessus de l'afficheur du robinet ou d'un autre organe fonctionnel.

Comme visible aux figures 5 à 7 notamment, lorsque le levier 9 de verrouillage est dans sa première position et que le levier 8 de commande est dans sa position de repos, les extrémités terminales de préhension 28, 29 du levier 8 de commande et du levier 9 d'actionnement sont de préférence situées à un même niveau selon la direction verticale du robinet mais sont décalées latéralement l'une de l'autre sur la face avant du corps 2 du robinet. En variante, les extrémités de préhension 28, 29 du levier 8 de commande et du levier 9 d'actionnement pourraient être décalées verticalement (par exemple l'extrémité 29 de préhension du levier de verrouillage pourrait être située en dessous de l'extrémité 28 de préhension du levier 8 de commande selon la direction verticale).

De même, lorsque le levier 9 de verrouillage est dans sa première position et que le levier 8 de commande est dans sa position de repos, les extrémités terminales de préhension 28, 29 du levier 8 de commande et du levier 9 de verrouillage sont décalées selon la direction avant/arrière du robinet. C'est-à-dire que, par exemple, l'extrémité 29 de préhension du levier 9 de verrouillage est de préférence en retrait d'un écart déterminé vers l'arrière par rapport à l'extrémité terminale 28 de préhension du levier 8 de commande (cf. figure 7).

Cet écart peut être compris quelques millimètres à quelques centimètres, notamment compris entre 0,5 et 4cm.

Selon l'invention, lorsque le levier 9 de verrouillage est déplacé dans sa seconde position, son extrémité 29 de préhension arrive au même niveau que l'extrémité terminale 28 de préhension du levier 8 de commande selon la direction avant/arrière.

Ceci permet à l'utilisateur de tirer/relever facilement vers lui le levier 9 de verrouillage pour libérer le levier 8 de commande. Le levier 8 de commande déverrouillé peut à son tour être tiré/relevé facilement avec la même main (cf. figure 10).

Dans la première position de verrouillage du levier 9 de verrouillage (cf. figures 1, 2, 5, 6, 7 et 9), l'extrémité 29 de préhension du levier 9 de verrouillage est par exemple disposée le long ou en vis-à-vis de la face avant du corps du robinet 1 à une première distance D1 de la face avant du corps du robinet (cf. figure 7). Cette première distance D1 peut être comprise entre zéro et 4cm par exemple, (notamment entre 0,5 et 3 cm ou entre 1 et 2cm).

Dans sa seconde position de déverrouillage du levier 9 de verrouillage, l'extrémité terminale 29 de préhension peut être écartée de la face avant du corps du robinet 1 d'une seconde distance D2 qui est supérieure à la première distance (cf. figure 7 position en pointillés), par exemple supérieure de 1 à 5 cm. Cette seconde distance D2 peut être comprise entre 1 et 6cm par exemple, notamment entre 3 et 5 cm.

Ainsi, pour actionner le levier 8 de commande, l'opérateur doit déplacer au préalable (ou simultanément) le levier 9 de verrouillage. Pour cela l'utilisateur peut tirer avec un doigt l'extrémité terminale 29 de préhension vers l'avant de façon à écarter le levier 9 de verrouillage du corps 2 du robinet.

Le levier 8 de commande et le levier 9 de verrouillage peuvent être articulés autour d'axes de rotations 21, 19 respectifs distincts ou confondus. De même, le levier 8 de commande et le levier 9 de verrouillage peuvent être articulés autour d'axes de rotations 21, 19 parallèles et les deux leviers 8, 9 peuvent se déplacent en rotation dans un même plan ou des plans adjacents parallèles (cf. figure 7 et 10).

Comme illustré aux figures 5 à 7 notamment, lorsque le levier 8 de commande est dans sa position de repos et que le levier 9 de verrouillage est dans la première position, de préférence une portion du levier 9 de verrouillage est située entre la face avant du corps du robinet et une portion du levier 8 de commande. C'est-à-dire que, selon la direction avant/arrière du robinet, le levier 9 de verrouillage peut être occultée partiellement en face avant par le levier 8 de commande à l'exception de sa portion 29 terminale de préhension qui fait saillie latéralement par rapport au levier 8 de commande.

Dans sa seconde position de déverrouillage, l'extrémité 29 de préhension du levier 9 de verrouillage peut être écartée de la face avant du corps du robinet 1 d'une seconde distance D2 qui est supérieure à la première distance (cf. figure 7 position en pointillés). Cette seconde distance D2 peut être comprise entre 0,5 et 6 cm par exemple, notamment entre 3 et 5 cm

Dans sa position active, l'extrémité terminale de préhension du levier 8 de commande est écartée du corps du robinet (cf. figure 10). Dans sa position active, le levier 8 de commande peut être sensiblement horizontal, c'est-à-dire sensiblement perpendiculaire à la face avant du corps 2 du robinet.

Selon l'invention, dans sa seconde position de déverrouillage (cf. figure 7 en pointillées), le levier 9 de verrouillage actionne l'ensemble de clapet(s) 6, 7 dans une position d'ouverture du circuit 3 selon une seconde section S2 d'ouverture (ouverture partielle) qui est de préférence inférieure à la première section d'ouverture S1.

De préférence, la seconde section d'ouverture S2 est inférieure à la première section d'ouverture S1 (les débits de soutirage correspondants sont ainsi distincts). Par exemple, le rapport S2/S1 entre la seconde section d'ouverture S2 et la première section d'ouverture S1 est compris entre 1/100 et 1/20, notamment entre 1/50 et 1/2 et de préférence entre 1/80 et 1/30 ou entre 1/10 et 1/5. Ainsi, pour pouvoir ouvrir complètement le circuit 3 du robinet 1 via le levier 8, l'utilisateur doit donc au préalable actionner le levier 9 de verrouillage distinct qui assure le déverrouillage du levier 8 de commande et ouvre partiellement le circuit.

Les deux degrés d'ouverture S1, S2 du circuit 3 peuvent être réalisés via un unique clapet 6 ayant deux positions d'ouverture respectives (cf. figure 1). De préférence cependant, les deux degrés d'ouverture (S1 S2) sont réalisés via deux clapets 6, 7 distincts (cf. figures 2 et 3).

Par exemple, comme illustré aux figures 2 et 3, le robinet 1 peut comporter deux clapets 6, 7 d'obturation distincts mobiles par rapport à des sièges respectifs et définissant respectivement, selon leur séquence d'ouverture (l'un 6 ouvert puis les deux 6, 7 ouverts), les deux sections d'ouverture distinctes S2, S1).

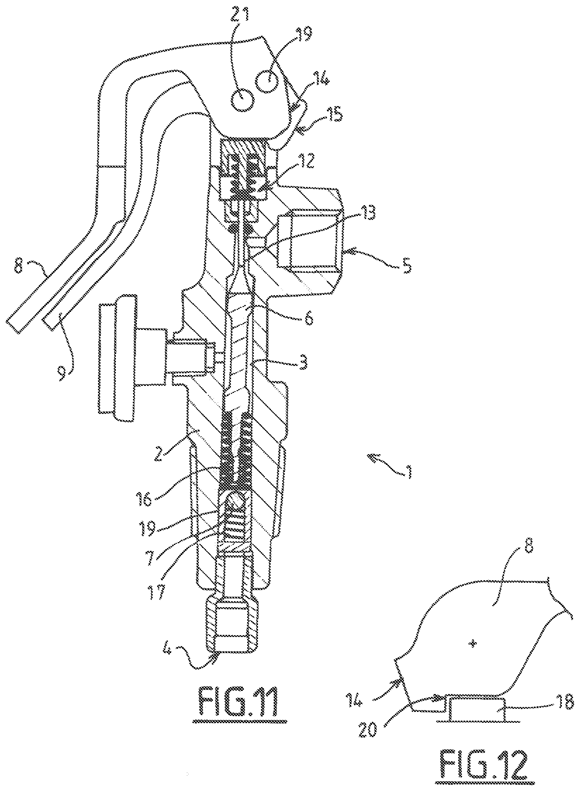

Les deux clapets 6, 7 d'obturation distincts pourraient être disposés en série dans le circuit 3 (cf. figure 11). Ce premier clapet 6 est par exemple mobile en translation par rapport à un siège et contraint vers le siège. En position fermée le premier clapet 6 peut fermer de façon étanche le circuit. En position fermée, le second clapet 7 ferme de façon non étanche le circuit 3. C'est-dire que le second clapet 7 comprend un orifice calibré définissant la seconde section S2 d'ouverture du circuit 3.

Le second clapet 7 comprend par exemple une bille 7 poussée vers un siège par un ressort 17. Par exemple, la bille 7 est en appui non étanche sur un siège (par exemple une douille) avec un espacement prédéterminé (section d'ouverture S2).

Le passage (seconde section d'ouverture S2) entre la bille 7 et le siège (douille) peut être obtenu en altérant la ligne d'étanchéité entre la bille et son siège par un brochage, un trait de scie ou autre outil sur la bille ou sur son siège. La bille 7 peut ne pas être parfaitement cylindrique (boule à facettes, bille poreuse, ou de tout autre forme pour permettre au gaz de passer avec un débit limité).

Une autre solution alternative peut être de placer un orifice calibré en parallèle de ce second clapet 7, pour assurer le passage limité du gaz. Alternativement cet orifice calibré peut passer au travers du corps du clapet 7.

L'actionnement du levier 9 de verrouillage peut déplacer un mécanisme 13 de transmission de mouvement d'une première course qui déplace à son tour le premier clapet 6 qui ouvre le circuit 3 au niveau du premier clapet 6 (cf. figure 1). Le gaz qui est admis à passer via l'orifice calibré du second clapet 7 peut ainsi s'échapper vers la seconde extrémité 5 du circuit 3. Le gaz provenant de la première extrémité 4 du circuit 3 passe en effet entre la bille 7 et la douille 19 puis entre corps 2 et le clapet 6 et peut sortir du robinet 1.

Le système de verrouillage du levier 8 de commande peut être localisé au niveau d'une came 14 solidaire de ce dernier.

Par exemple, le profil de la came 14 du levier 8 de commande peut comporter une forme 20 qui vient buter sur une forme complémentaire du mécanisme de transmission de mouvement (et notamment l'extrémité d'un poussoir 18 cf. figure 12). En position haute (actionneur 9 en position de verrouillage cf. figure 6 ou 2), le mécanisme de transmission de mouvement (et notamment l'extrémité d'un poussoir 18) forme une butée mécanique empêchant la rotation du levier 8 de commande.

En position basse (actionneur 9 en position de déverrouillage, cf. pointillés à la figure 7 ou 3), le mécanisme de transmission de mouvement (et notamment l'extrémité d'un poussoir 18) est escamoté et ne forme plus une butée mécanique empêchant la rotation du levier 8 de commande.

A l'issue de cette première course, le levier 8 de commande est ainsi déverrouillé et un débit réduit de gaz est libéré.

Cette première course permet ainsi de positionner le poussoir 18 au-delà d'un angle de butée au niveau du profil 20 de came 14.

Le levier 8 de commande peut ensuite être pivoté à son tour pour déplacer le mécanisme 18, 13 un peu plus loin (seconde course). Cette seconde course permet de séparer le second clapet 7 (bille) de son siège (via l'extrémité du premier clapet 6). Dans cette configuration, le circuit 3 est ouvert de façon plus importante (totalement, première section d'ouverture S1). Ceci permet au gaz un grand débit et une montée en pression plus rapide en aval des clapets.

Lorsque le levier 8 de commande est relevé (position active) le levier 9 d'actionnent peut (ou éventuellement doit) lui aussi être relevé (cf. figure 10). Bien entendu en variante le levier 9 d'actionnement pourrait rester en position basse (plus près du corps que le levier 8 de commande qui est relevé en position active).

Ainsi, les deux clapets 6, 7 peuvent être sont commandés par un même mécanisme de transmission de mouvement et notamment au moins un même poussoir 18, 13 mobile.

Ce mécanisme de transmission de mouvement peut se translater de deux courses différentes, l'une courte permettant un débit limité (seconde section S2 d'ouverture), l'autre longue permettant le plein débit (première section d'ouverture S1).

Bien entendu, l'invention n'est pas limitée à l'exemple des figures décrites ci-dessus. Les deux courses du mécanisme de transmission de mouvement peuvent être pilotées par des cames avec des axes de rotation 21, 19 et solidaires des leviers 8, 9 identiques. Les axes de rotation peuvent être confondus ou distincts.

De préférence, la (re)fermeture complète des deux clapets 6, 7 peut être réalisée en un seul geste qui permet de neutraliser les deux clapets 6, 7 dans la même action manuelle.

Par exemple, un mécanisme de couplage du déplacement du levier 8 de commande et de l'actionneur 9 peut être intégré aux cames 14, 15 des leviers.

Par exemple, un axe 21 solidaire d'au moins une came 8 peut être reçu dans au moins une gorge formée dans l'autre came 15 et accueillant et guidant l'axe 21.

Ainsi le déplacement du levier 8 de commande vers sa position repos provoque également le retour du levier 9 d'actionnement vers sa position de verrouillage.

Inversement, lorsque le levier 9 de verrouillage a été relevé dans sa seconde position de déverrouillage, le déplacement du levier 8 de commande vers sa position active (par exemple relevée) peut entraîner également le déplacement du levier 9 de verrouillage (relèvement par exemple dans la position de la figure 10).

Bien entendu, l'invention n'est pas limitée aux exemples ci-dessus. Par exemple, le mécanisme de verrouillage pourrait être intégré au niveau des cames 14, 15 via un système d'axes 21 et gorges du même type que celui du mécanisme de couplage. De même, ce mécanisme de verrouillage du levier 8 de commande pourrait être localisé ailleurs sur le robinet. De plus ce mécanisme de verrouillage pourrait être du type magnétique et/ou pneumatique et/ou électromécanique et/ou hydraulique.

Selon un mode de réalisation possible, un relèvement du levier 9 de verrouillage 9 permet donc de déverrouiller le levier 8 associé éventuellement à une ouverture partielle du circuit.

Cette configuration procure une double sécurité: 1) la nécessité d'un déverrouillage limitant les ouvertures intempestives 2) le déverrouillage ouvre partiellement le circuit 3 ce qui réalise l'amorce d'une ouverture progressive et avertit l'utilisateur de la présence de gaz en sortie.

Ceci permet de réduire le pic de pression en aval en ralentissant la vitesse de mise en pression de la chambre aval du circuit gaz connecté à la sortie 5 du robinet 1.

La figure 4 illustre schématiquement le fonctionnement de cette possibilité avantageuse mais facultative. Si le levier 9 de verrouillage n'est pas activé (N) (c'est-à-dire s'il est dans sa première position de verrouillage), le circuit 3 est fermé (F). Si le levier 9 de verrouillage 9 est activé vars sa second position de déverrouillage (O), le circuit 3 est ouvert avec une degré d'ouverture S2 qui permet ensuite l'actionnement du levier 8. L'actionnement du levier 8 de commande (O) permet alors d'ouvrir totalement le circuit (S1). Sinon (N), le robinet 1 revient dans sa position fermée ou ouverte selon la position de l'actionneur 9.

De préférence, le sens d'actionnement du levier 9 de verrouillage est identique (par exemple translation/rotation pour s'écarter du corps 2) au sens d'actionnement du levier 8 de commande (levier 8 de commande relevé pour s'écarter du corps). Idem pour le retour dans les positions de repos et de verrouillage (vers le corps 2).

De préférence également, le levier 9 de verrouillage est monostable, c'est-à-dire que l'utilisateur doit maintenir l'effort sur ce dernier (relevé) pour garder la course active, sinon il retourne automatiquement dans sa première position de verrouillage (circuit 3 fermé).

Pour cela, le robinet 1 peut comporter un organe 12 de rappel de l'actionneur 9 vers sa première position de verrouillage (un ressort notamment) cf. figures 2 et 3. Alternativement ou cumulativement, l'organe de rappel du levier 9 de verrouillage vers sa première position de verrouillage peut comprendre ou être constitué de la pression du fluide dans le circuit. C'est-à-dire que la pression de service du gaz dans le circuit peut assurer un effort sur le levier 9 de verrouillage qui tend à le ramener dans sa première position.

Cependant, il est possible de prévoir une troisième position stable. Par exemple, si le levier 9 de verrouillage accompagne le levier 8 de commande dans sa position active (cf. par exemple figure 10), le levier 9 pourrait avoir également une position stable dans cette troisième position.

Le levier 8 de commande peut quant à lui avoir une course qui est bistable. C'est-à-dire que, au moins ses les positions de repos (figure 5) et active (figure 10) peuvent être stables. Bien entendu il est possible de prévoir une ou d'autres position stables, notamment une position stable intermédiaire entre les deux positions de repos et active dans laquelle le degré d'ouverture de l'ensemble de clapets 6, 7 est identique à celui de la position de repos ou à celui de la position active.

Par exemple, un mécanisme de point-dure, butée (profil de came du levier 8) assure ces positions stables. L'utilisateur peut relâcher le levier 8 de commande en position active sans que ceci ne provoque la fermeture du circuit 3.

De préférence, la fermeture du circuit 3 (à partir d'une position grande ouverte S1) est réalisée d'un seul geste. De préférence, le levier 8 de commande et le levier 9 de verrouillage 9 sont déplacés ensemble en position initiale (circuit fermé) via un mécanisme de couplage du déplacement du levier 8 de commande et du levier 9 de verrouillage. Par exemple, ce mécanisme de couplage sollicite automatiquement l'actionneur 9 vers sa première position lorsque le levier de commande est déplacé de sa position active vers sa position de repos (de la position de la figure 10 vers la position de la figure 5).

De préférence, la manipulation des deux leviers 8, 9 est possible d'une seule main (dans le sens de l'ouverture et/ou dans le sens de la fermeture du circuit).

Ainsi, lors de l'actionnement (tirage vers l'avant) du levier de verrouillage 9, une came 15 de ce levier 9 peut déplacer le premier clapet 6 via un mécanisme de transmission de mouvement. Le mécanisme de transmission de mouvement peut comprendre notamment un ou plusieurs axes-poussoirs 13, 18 en série (et/ou en parallèle), un organe élastique 12 (ressort notamment pour rattraper les jeux et/ou maintenir un contact dans la chaine de transmission de mouvement entre la came 15 et le clapet 6). Tout autre mécanisme de transmission de mouvement peut être envisagé. On pourra par exemple se référer au document FR2828922A1.

On conçoit donc que, tout en étant de structure simple et peu coûteuse, l'invention présente de nombreux avantages.

Dans le cas où l'actionnement du levier 9 de déverrouillage réalise une ouverture partielle du circuit, cette structure de robinet permet également d'autres fonctionnalités pour l'utilisateur. Ainsi, l'actionnement bref uniquement de l'actionneur 9 permet à l'utilisateur de générer un jet de gaz suffisant et contrôlé pour purger/nettoyer l'aval du circuit 3 et notamment le raccord de sortie. Ceci est notamment une mesure recommandée par les fabricants de robinets.

Comme visible aux figures, le corps 2 du robinet peut comporter une portion 22 d'occultation au moins de l'extrémité terminale 29 de préhension du levier 9 de verrouillage. Cette portion d'occultation 22 forme un écran entre la face arrière du corps du robinet et l'extrémité terminale 29 de préhension du levier 9, pour empêcher ou limiter la possibilité qu'un objet rectiligne ne puisse pousser le levier 9 de verrouillage par l'arrière du robinet au niveau de l'extrémité terminale 29 de préhension (pour la déplacer de sa position de verrouillage vers sa position de déverrouillage).

Ainsi, comme visible à la figure 8 en particulier, en vue de derrière, le levier 9 de verrouillage est caché par le corps 2 du robinet 1 et plus particulièrement par la portion 22 d'occultation qui peut former une bosse latérale sur le corps 2 du levier (cf. figure 5 également).

La portion 22 d'occultation peut être monobloc avec la matière du corps du robinet délimitant le circuit 3 interne. C'est-à-dire que la portion 22 d'osculation peut être monobloc avec le métal (laiton par exemple) qui forme structurellement le robinet et abrite ses composants internes. Bien entendu, en variante, et comme représenté aux figures 5 à 10, cette portion 22 d'occultation peut être formée une coque ou un habillage ou un organe rapporté sur le corps (métallique) du robinet délimitant le circuit (3) interne de façon définitive ou de façon amovible. C'est-à-dire que cette portion 22 d'occultation pourrait être retirée en cas de retrait de cette coque extérieure. Ainsi, lorsqu'il s'agit de définir la portion d'occultation 22, le terme « corps » du robinet désigne ici l'enveloppe du robinet définissant les contours extérieurs du robinet.

La portion 22 d'occultation empêche ou limite le risque d'une ouverture intempestive par l'arrière (les termes avant/arrière, et la direction avant/arrière ou les directions latérales font référence aux faces avant et arrière du robinet).

Comme visible à la figure 6, la face arrière de la portion 22 d'occultation peut être courbée ou inclinée en direction de la face avant du robinet à mesure qu'elle s'étend vers une extrémité latérale du corps du robinet. Ceci permet de dévier latéralement un objet qui impacterait la face arrière du corps 2 du robinet.

De même, la face arrière de l'extrémité terminale 29 de préhension du levier 9 de verrouillage, c'est-à-dire la face qui est située en vis-à-vis de de la face avant du corps 2 du robinet 1, peut être courbe ou inclinée en direction l'avant du robinet à mesure qu'elle s'étend vers l'extrémité latérale du robinet. Ceci peut également contribuer à dévier latéralement l'extrémité d'un objet qui impacterai le levier 9 de verrouillage par l'arrière au niveau de l'extrémité terminale 29 de préhension du levier 9 de verrouillage. Ceci limite la possibilité d'un appui prolongé d'un objet sur cette surface.

De préférence, au moins le levier 9 de verrouillage peut se positionner dans un renfoncement du corps 2, ce qui le rend le d'autant moins accessible par la face arrière.

Bien sûr en variante, le ou les leviers 9, 8 pourraient être logés dans un ou des renfoncements creux de la face avant du corps 2 du robinet empêchant tout accès par l'arrière (quel que soit l'angle d'incidence).

Les figures 6 et 8 à 10 illustrent le cas où le robinet est monté sur un réservoir 11 et protégé par un chapeau 100 de protection. Le chapeau 100 (par exemple en forme d'arche) possède au moins une ouverture 16 arrière d'accès au robinet par sa face arrière. De préférence, dans la première position du levier 9 de verrouillage, l'accessibilité directe de l'extrémité terminale 29 de préhension du levier 9 par l'ouverture 16 arrière avec un objet rectiligne (un axe ou une tige par exemple) n'est pas possible ou possible uniquement dans une fenêtre étroite définie par un direction décalée d'un angle (A) par rapport à la direction avant/arrière du robinet. Cet angle A peut être compris entre 20 et 60°, notamment entre 20 et 40° ou 50° selon l'orientation angulaire du chapeau par rapport à la direction avant/arrière. De plus, ladite fenêtre a de préférence une largeur I inférieure ou égale à 3cm (cf. figure 6 ou deux montants latéraux du chapeau 100 sont représentés schématiquement et en section horizontale).

De plus, de préférence, dans la première position du levier 9 de verrouillage, la distance P d'accessibilité directe de l'extrémité terminale 29 de préhension du levier 9 au travers de l'ouverture arrière 16 est comprise entre 5cm ou 6cm et 20 cm et de préférence compris entre 8 et 15cm au moins.

C'est-à-dire que les géométries relatives de la portion 22 d'occultation et du chapeau 100 rendent impossible ou quasi-impossible l'activation accidentelle du levier 9 de verrouillage par l'arrière. La zone accessible est en effet extrêmement réduite ou nulle. Il faudrait par exemple un angle bien précis défini ci-dessus associé à une forme bien précise d'objet (largeur et longueur) pour pouvoir l'actionner par l'arrière.

Les formes possibles sont obligatoirement élancées et si l'objet est trop court (par exemple inférieur à 6 à 8cm), il n'atteindra pas le levier 9. De plus si l'objet est trop long, le maintien en appui stable sur le levier 9 de verrouillage devient très difficile ou impossible.

La section de l'objet doit en particulier être réduite sinon elle ne passera pas dans l'interstice (I) entre le chapeau 11 et la portion 22 d'occultation du corps 2 (interstice par exemple égal à 2 cm de large).

Dans le cas où le levier 8 de commande est également un levier, par exemple adjacent au levier 9 de verrouillage, la portion 22 d'occultation occulte également à fortiori le levier 8 de commande.

L'invention s'applique par exemple aux robinet ou vannes à levier(s), qui peuvent s'ouvrir en levant (ou poussant) le levier d'isolement principale pour bouteille(s) de fluide sous pression (gaz ou mélanges de gaz notamment) ayant par exemple un volume en eau entre 5 et 50 litres.

## Revendications

1. Robinet pour fluide sous pression comprenant un corps (2) ayant une face avant et une face arrière et abritant un circuit (3) interne de fluide ayant une extrémité amont (4) destinée à être mise en relation avec une réserve (11) de fiuide sous pression et extrémité aval (5) destinée à être mise en relation avec un utilisateur de fluide, le circuit (3) comprenant un ensemble de clapet(s) (6, 7) comprenant au moins un clapet d'obturation permettant de fermer ou d'ouvrir le circuit (3), le robinet (1) comprenant un levier (8) de commande de l'ensemble de clapet(s) (6, 7) comprenant une extrémité (28) de préhension notamment terminale, le levier (8) de commande étant monté mobile en rotation sur robinet entre une position de repos dans laquelle le levier (8) de commande est disposé le long ou en vis-à-vis de la face avant du corps (2) du robinet (1) et dans laquelle l'ensemble de clapet(s) (6, 7) est disposé dans une position de fermeture du circuit (3) et une position active dans laquelle le levier (8) de commande est écarté du corps (2) du robinet et actionne l'ensemble de clapet(s) (6, 7) dans une position d'ouverture du circuit (3) selon une première section d'ouverture (S1), le robinet (1) comportant un mécanisme (9, 10) de verrouillage du levier (8) de commande dans sa position de repos, le mécanisme (9, 10) de verrouillage comprenant un levier (9) de verrouillage muni d'une extrémité (29) de préhension, notamment terminale, le levier (9) de verrouillage étant mobile en rotation sur le robinet entre une première position de verrouillage et une seconde position de déverrouillage, dans sa première position le levier (9) de verrouillage étant disposé le long ou en vis-à-vis de la face avant du corps (2) du robinet (1) et assurant un verrouillage du levier (8) de commande empêchant son déplacement de sa position de repos vers sa position active, dans sa seconde position le levier (9) de verrouillage étant plus écarté du corps (2) du robinet et autorisant le déplacement du levier (8) de commande de sa position de repos vers sa position active, lorsque le levier (9) de verrouillage est dans sa première position et que le levier (8) de commande est dans sa position de repos, les extrémités de préhension (28, 29) du levier (8) de commande et du levier (9) de verrouillage étant disposées de façon adjacente le long ou en vis-à-vis de la face avant du corps (2) du robinet (1), lorsque le levier (9) de verrouillage est dans sa première position et que le levier (8) de commande est dans sa position de repos, les extrémités de préhension (28, 29) du levier (8) de commande et du levier (9) de verrouillage étant décalées selon la direction avant/arrière du robinet, l'extrémité (29) de préhension du levier (9) de verrouillage étant en retrait d'un écart déterminé vers l'arrière par rapport à l'extrémité (28) de préhension du levier (8) de commande et lorsque le levier (9) de verrouillage est déplacé dans sa seconde position, son extrémité (29) de préhension arrivant au même niveau que l'extrémité (28) de préhension du levier (8) de commande selon la direction avant/arrière, **caractérisé en ce que**, dans sa seconde position de déverrouillage, le levier (9) de verrouillage actionne l'ensemble de clapet(s) (6, 7) dans une position d'ouverture du circuit (3) selon une seconde section (S2) d'ouverture, la section d'ouverture (S2) étant différente et notamment inférieure à la première section d'ouverture (S1).

2. Robinet selon la revendication 1, **caractérisé en ce que**, lorsque le levier (9) de verrouillage est dans sa première position et que le levier (8) de commande est dans sa position de repos, les extrémités de préhension (28, 29) du levier (8) de commande et du levier (9) de verrouillage sont décalées latéralement et/ou verticalement l'une de l'autre sur la face avant du corps (2) du robinet.

3. Robinet selon l'une quelconque des revendications 1 à 2, **caractérisé en ce que** l'écart est compris quelques millimètres à quelques centimètres, notamment compris entre 0,5 et 4cm.

4. Robinet selon l'une quelconque des revendications 1 à 3, **caractérisé en ce que** lorsque le levier (9) de verrouillage est dans sa seconde position et que le levier (8) de commande est déplacé vers sa position active, un mécanisme du robinet permet ou provoque le même déplacement du levier (9) de verrouillage.

5. Robinet selon l'une quelconque des revendications 1 à 4, **caractérisé en ce que** le robinet comporte un mécanisme (21) de couplage du déplacement du levier (8) de commande et du levier (9) de verrouillage lorsque le levier (8) de commande est déplacé de sa position active vers sa position de repos et/ou de sa position de repos vers sa position active, le mécanisme de couplage (21) déplaçant automatiquement le levier (9) de verrouillage lorsque le levier (8) de commande est déplacé,

6. Robinet selon l'une quelconque des revendications 1 à 5, **caractérisé en ce que**, dans la première position du levier (9) de verrouillage, l'extrémité (29) de préhension de ce levier (9) de verrouillage est située à une première distance (D1) de la face ayant du corps du robinet qui est comprise entre zéro et 4cm, notamment entre 1 et 3 cm.

7. Robinet selon l'une quelconque des revendications 1 à 6, **caractérisé en ce que** le levier (8) de commande et le levier (9) de verrouillage sont articulés autour d'axes de rotations respectifs (21, 19) distincts ou confondus.

8. Robinet selon la revendication 7, **caractérisé en ce que** le levier (8) de commande et le levier (9) de verrouillage sont mobiles en rotation dans un même plan ou des plans adjacents parallèles.

9. Robinet selon l'une quelconque des revendications 1 à 8, **caractérisé en ce que**, lorsque le levier (8) de commande est dans sa position de repos et que le levier (9) de verrouillage est dans la première position, une portion du levier (9) de verrouillage est située entre la face avant du corps du robinet et une portion du levier (8) de commande c'est-à-dire que, selon la direction avant/arrière du robinet, le levier (9) de verrouillage est occulté partiellement par le levier (8) de commande à l'exception de sa portion (29) de préhension.

10. Robinet selon l'une quelconque des revendications 1 à 9, **caractérisé en ce que** l'ensemble de clapet(s) comporte deux clapets (6, 7) d'obturation distincts mobiles par rapport à des sièges respectifs et définissant en position d'ouverture respectivement les deux sections d'ouverture distinctes (S1, S2), les deux clapets (6, 7) étant commandés respectivement par le levier (8) de commande et par le levier de verrouillage (9).

11. Robinet selon l'une quelconque des revendications 1 à 10, **caractérisé en ce qu'**il comporte un organe (12) de rappel du levier de verrouillage (9) vers sa première position de verrouillage.

12. Robinet selon la revendication 10 **caractérisé en ce que** les deux clapets d'obturation distincts sont disposés en série dans une même conduite du circuit.

13. Robinet selon l'une quelconque des revendications 10 et 12 **caractérisé en ce que** les deux clapets d'obturation sont commandés par au moins un axe-poussoir mobile commandé par le levier de commande et par l'actionneur.

14. Robinet selon la revendication 13 **caractérisé en ce que** le déplacement du levier (9) de verrouillage de sa première position de verrouillage vers sa seconde position de déverrouillage déplace le poussoir selon une première course actionnant l'ouverture d'un premier clapet(s) dans une position d'ouverture avec la seconde section d'ouverture du circuit, le déplacement ultérieur du levier (8) de commande de sa position de repos vers sa position active déplace le poussoir selon une seconde course actionnant l'ouverture du second clapet dans une position d'ouverture du circuit avec la première section d'ouverture.

15. Réservoir de fluide sous pression comprenant un robinet selon l'une quelconque des revendications 1 à 14.

## Patentansprüche

1. Schließhahn für unter Druck stehendes Fluid, welcher einen Körper (2) umfasst, der eine Vorderseite und eine Rückseite aufweist und in dem ein innerer Fluidkreislauf (3) angeordnet ist, der ein stromaufwärtiges Ende (4), das dazu bestimmt ist, mit einem Vorrat (11) von unter Druck stehendem Fluid in Verbindung gebracht zu werden, und ein stromabwärtiges Ende (5), das dazu bestimmt ist, mit einem Benutzer von Fluid in Verbindung gebracht zu werden, aufweist, wobei der Kreislauf (3) eine Ventilanordnung (6, 7) umfasst, die wenigstens ein Verschlussventil umfasst, welches ermöglicht, den Kreislauf (3) zu schließen oder zu öffnen, wobei der Schließhahn (1) einen Hebel (8) zur Steuerung der Ventilanordnung (6, 7) umfasst, der ein Greifende (28), insbesondere als Abschlussende, umfasst, wobei der Steuerhebel (8) an dem Schließhahn drehbeweglich zwischen einer Ruheposition, in welcher der Steuerhebel (8) entlang oder gegenüber der Vorderseite des Körpers (2) des Schließhahns (1) angeordnet ist und in welcher die Ventilanordnung (6, 7) in einer Schließposition des Kreislaufs (3) angeordnet ist, und einer aktiven Position, in welcher der Steuerhebel (8) vom Körper (2) des Schließhahns beabstandet ist und die Ventilanordnung (6, 7) in einer Öffnungsposition des Kreislaufs (3) gemäß einem ersten Öffnungsquerschnitt (S1) betätigt, angebracht ist, wobei der Schließhahn (1) einen Mechanismus (9, 10) zur Verriegelung des Steuerhebels (8) in seiner Ruheposition umfasst, wobei der Verriegelungsmechanismus (9, 10) einen Verriegelungshebel (9) umfasst, der mit einem Greifende (29), insbesondere einem Abschlussende, versehen ist, wobei der Verriegelungshebel (9) an dem Schließhahn drehbeweglich zwischen einer ersten Position der Verriegelung und einer zweiten Position der Entriegelung angebracht ist, wobei in seiner ersten Position der Verriegelungshebel (9) entlang oder gegenüber der Vorderseite des Körpers (2) des Schließhahns (1) angeordnet ist und eine Verriegelung des Steuerhebels (8) sicherstellt, die seine Verlagerung aus seiner Ruheposition in seine aktive Position verhindert, wobei in seiner zweiten Position der Verriegelungshebel (9) weiter vom Körper (2) des Schließhahns beabstandet ist und die Verlagerung des Steuerhebels (8) aus seiner Ruheposition in seine aktive Position gestattet, wobei, wenn sich der Verriegelungshebel (9) in seiner ersten Position befindet und sich der Steuerhebel (8) in seiner Ruheposition befindet, die Greifenden (28, 29) des Steuerhebels (8) und des Verriegelungshebels (9) benachbart entlang oder gegenüber der Vorderseite des Körpers (2) des Schließhahns (1) angeordnet sind, wobei, wenn sich der Verriegelungshebel (9) in seiner ersten Position befindet und sich der Steuerhebel (8) in seiner Ruheposition befindet, die Greifenden (28, 29) des Steuerhebels (8) und des Verriegelungshebels (9) in der Vorn-Hinten-Richtung des Schließhahns zueinander versetzt sind, wobei das Greifende (29) des Verriegelungshebels (9) in Bezug auf das Greifende (28) des Steuerhebels (8) um einen bestimmten Abstand nach hinten zurückversetzt ist, und wobei, wenn der Verriegelungshebel (9) in seine zweite Position bewegt wird, sein Greifende (29) auf dasselbe Niveau in der Vorn-Hinten-Richtung wie das Greifende (28) des Steuerhebels (8) gelangt, **dadurch gekennzeichnet, dass** in seiner zweiten Position der Entriegelung der Verriegelungshebel (9) die Ventilanordnung (6, 7) in einer Öffnungsposition des Kreislaufs (3) gemäß einem zweiten Öffnungsquerschnitt (S2) betätigt, wobei der Öffnungsquerschnitt (S2) von dem ersten Öffnungsquerschnitt (S1) verschieden und insbesondere kleiner als dieser ist.

2. Schließhahn nach Anspruch 1, **dadurch gekennzeichnet, dass**, wenn sich der Verriegelungshebel (9) in seiner ersten Position befindet und sich der Steuerhebel (8) in seiner Ruheposition befindet, die Greifenden (28, 29) des Steuerhebels (8) und des Verriegelungshebels (9) auf der Vorderseite des Körpers (2) des Schließhahns seitlich und/oder vertikal zueinander versetzt sind.

3. Schließhahn nach einem der Ansprüche 1 bis 2, **dadurch gekennzeichnet, dass** der Abstand zwischen einigen Millimetern und einigen Zentimetern liegt, insbesondere zwischen 0,5 und 4 cm.

4. Schließhahn nach einem der Ansprüche 1 bis 3, **dadurch gekennzeichnet, dass**, wenn sich der Verriegelungshebel (9) in seiner zweiten Position befindet und der Steuerhebel (8) in seine aktive Position verlagert wird, ein Mechanismus des Schließhahns dieselbe Verlagerung des Verriegelungshebels (9) ermöglicht oder hervorruft.

5. Schließhahn nach einem der Ansprüche 1 bis 4, **dadurch gekennzeichnet, dass** der Schließhahn einen Mechanismus (21) zur Kopplung der Verlagerung des Steuerhebels (8) und des Verriegelungshebels (9), wenn der Steuerhebel (8) aus seiner aktiven Position in seine Ruheposition und/oder aus seiner Ruheposition in seine aktive Position verlagert wird, aufweist, wobei der Kopplungsmechanismus (21) den Verriegelungshebel (9) automatisch verlagert, wenn der Steuerhebel (8) verlagert wird.

6. Schließhahn nach einem der Ansprüche 1 bis 5, **dadurch gekennzeichnet, dass** in der ersten Position des Verriegelungshebels (9) das Greifende (29) dieses Verriegelungshebels (9) sich in einem ersten Abstand (D1) von der Vorderseite des Körpers des Schließhahns befindet, welcher zwischen null und 4 cm, vorzugsweise zwischen 1 und 3 cm liegt.

7. Schließhahn nach einem der Ansprüche 1 bis 6, **dadurch gekennzeichnet, dass** der Steuerhebel (8) und der Verriegelungshebel (9) um jeweilige Drehachsen (21, 19) angelenkt sind, die verschieden sind oder zusammenfallen.

8. Schließhahn nach Anspruch 7, **dadurch gekennzeichnet, dass** der Steuerhebel (8) und der Verriegelungshebel (9) drehbeweglich in derselben Ebene oder in benachbarten parallelen Ebenen sind.

9. Schließhahn nach einem der Ansprüche 1 bis 8, **dadurch gekennzeichnet, dass**, wenn sich der Steuerhebel (8) in seiner Ruheposition befindet und sich der Verriegelungshebel (9) in der ersten Position befindet, ein Abschnitt des Verriegelungshebels (9) sich zwischen der Vorderseite des Körpers des Schließhahns und einem Abschnitt des Steuerhebels (8) befindet, das heißt, dass in der Vorn-Hinten-Richtung des Schließhahns der Verriegelungshebel (9) teilweise durch den Steuerhebel (8) verdeckt wird, mit Ausnahme seines Greifabschnitts (29) .

10. Schließhahn nach einem der Ansprüche 1 bis 9, **dadurch gekennzeichnet, dass** die Ventilanordnung zwei verschiedene Verschlussventile (6, 7) aufweist, die in Bezug auf jeweilige Sitze beweglich sind und in der Öffnungsposition jeweils einen der zwei verschiedenen Öffnungsquerschnitte (S1, S2) definieren, wobei die zwei Ventile (6, 7) durch den Steuerhebel (8) bzw. durch den Verriegelungshebel (9) gesteuert werden.

11. Schließhahn nach einem der Ansprüche 1 bis 10, **dadurch gekennzeichnet, dass** er ein Organ (12) zur Rückstellung des Verriegelungshebels (9) in seine erste Position der Verriegelung aufweist.

12. Schließhahn nach Anspruch 10, **dadurch gekennzeichnet, dass** die zwei verschiedenen Verschlussventile in derselben Leitung des Kreislaufs in Reihe angeordnet sind.

13. Schließhahn nach einem der Ansprüche 10 und 12, **dadurch gekennzeichnet, dass** die zwei Verschlussventile durch wenigstens einen beweglichen Schubbolzen gesteuert werden, der durch Steuerhebel und durch den Aktuator gesteuert wird.

14. Schließhahn nach Anspruch 13, **dadurch gekennzeichnet, dass** die Verlagerung des Verriegelungshebels (9) aus seiner ersten Position der Verriegelung in seine zweite Position der Entriegelung den Schieber entlang eines ersten Weges verschiebt, der das Öffnen eines ersten Ventils in einer Öffnungsposition mit dem zweiten Öffnungsquerschnitt des Kreislaufs bewirkt, und die spätere Verlagerung des Steuerhebels (8) aus seiner Ruheposition in seine aktive Position den Schieber entlang eines zweiten Weges verschiebt, der das Öffnen des zweiten Ventils in einer Öffnungsposition des Kreislaufs mit dem ersten Öffnungsquerschnitt bewirkt.

15. Behälter für unter Druck stehendes Fluid, der einen Schließhahn nach einem der Ansprüche 1 bis 14 umfasst.

## Claims

1. Valve for pressurized fluid comprising a body (2) having a front face and a rear face and housing an internal fluid circuit (3) having an upstream end (4) intended to be placed in communication with a reserve (11) of pressurized fluid and a downstream end (5) intended to be placed in communication with a user of fluid, the circuit (3) comprising a collection of valve shutter(s) (6, 7) comprising at least one shutoff valve shutter allowing the circuit (3) to be closed or opened, the valve (1) comprising a control lever (8) controlling the collection of valve shutter(s) (6, 7), comprising an end (28), notably a terminal end, for grasping, the control lever (8) being mounted with the ability to rotate on the valve between a rest position in which the control lever (8) is positioned along or facing the front face of the body (2) of the valve (1) and in which the collection of valve shutter(s) (6, 7) is placed in a position in which the circuit (3) is closed, and an active position in which the control lever (8) is away from the body (2) of the valve and actuates the collection of valve shutter (s) (6, 7) into a position in which the circuit (3) is open with a first bore section (S1), the valve (1) comprising a locking mechanism (9, 10) locking the control lever (8) in its rest position, the locking mechanism (9, 10) comprising a locking lever (9) equipped with an end (29), notably a terminal end, for grasping, the locking lever (9) being able to move in rotation on the valve between a locked first position and an unlocked second position, in its first position, the locking lever (9) being positioned along or facing the front face of the body (2) of the valve (1) and locking the control lever (8) preventing it from being moved from its rest position toward its active position, in its second position, the locking lever (9) being further away from the body (2) of the valve and allowing the control lever (8) to move from its rest position toward its active position, when the locking lever (9) is in its first position and at the same time the control lever (8) is in its rest position, the terminal ends for grasping (28, 29) of the control lever (8) and of the locking lever (9) being positioned adjacently along or facing the front face of the body (2) of the valve (1), when the locking lever (9) is in its first position and at the same time the control lever (8) is in its rest position, the ends for grasping (28, 29) of the control lever (8) and of the locking lever (9) being offset in the front/rear direction of the valve, the end (29) for grasping of the locking lever (9) being set back in the rearward direction by a determined separation with respect to the end (28) for grasping of the control lever (8), and when the locking lever (9) is moved into its second position, its end (29) for grasping coming to the same level as the end (28) for grasping of the control lever (8) in the front/rear direction, **characterized in that**, in its unlocked second position, the locking lever (9) actuates the collection of valve shutter(s) (6, 7) into a position in which the circuit (3) is open with a second bore section (S2), the second bore section (S2) being different from and notably smaller than the first bore section (S1).

2. Valve according to Claim 1, **characterized in that** when the locking lever (9) is in its first position and at the same time the control lever (8) is in its rest position, the ends for grasping (28, 29) of the control lever (8) and of the locking lever (9) are offset laterally and/or vertically with respect to one another on the front face of the body (2) of the valve.

3. Valve according to either one of Claims 1 and 2, **characterized in that** the separation is comprised between a few millimetres and a few centimetres, notably comprised between 0.5 and 4 cm.

4. Valve according to any one of Claims 1 to 3, **characterized in that** when the locking lever (9) is in its second position and at the same time the control lever (8) is moved toward its active position, a mechanism of the valve allows or causes the same movement of the locking lever (9).

5. Valve according to any one of Claims 1 to 4, **characterized in that** the valve comprises a coupling mechanism (21) that couples the movement of the control lever (8) and of the locking lever (9) when the control lever (8) is moved from its active position toward its rest position and/or from its rest position toward its active position, the coupling mechanism (21) automatically moving the locking lever (9) when the control lever (8) is moved.

6. Valve according to any one of Claims 1 to 5, **characterized in that** when the locking lever (9) is in the first position, the end (29) for grasping of this locking lever (9) is situated a first distance (D1) away from the front face of the body of the valve which distance is comprised between zero and 4 cm, notably between 1 and 3 cm.

7. Valve according to any one of Claims 1 to 6, **characterized in that** the control lever (8) and the locking lever (9) are articulated about respective, distinct or coincident rotation axles (21, 19).

8. Valve according to Claim 7, **characterized in that** the control lever (8) and the locking lever (9) are able to move in rotation in the one same plane or in parallel adjacent planes.

9. Valve according to any one of Claims 1 to 8, **characterized in that**, when the control lever (8) is in its rest position and at the same time the locking lever (9) is in the first position, a portion of the locking lever (9) is situated between the front face of the body of the valve and a portion of the control lever (8), which is to say that, in the front/rear direction of the valve, the locking lever (9) is partially concealed by the control lever (8) except for its portion (29) for grasping.

10. Valve according to any one of Claims 1 to 9, **characterized in that** the collection of valve shutter(s) comprises two distinct shut-off valve shutters (6, 7) that are able to move with respect to respective seats and, in the open position, respectively define the two distinct bore sections (S1, S2), the two valve shutters (6, 7) being controlled by the control lever (8) and by the locking lever (9), respectively.

11. Valve according to any one of Claims 1 to 10, **characterized in that** it comprises a return member (12) returning the locking lever (9) toward its locked first position.

12. Valve according to Claim 10, **characterized in that** the two distinct shut-off valve shutters are arranged in series in the one same line of the circuit.

13. Valve according to either one of Claims 10 and 12, **characterized in that** the two shutoff valve shutters are controlled by at least one mobile pushrod controlled by the control lever and by the actuator.

14. Valve according to Claim 13, **characterized in that** the movement of the locking lever (9) from its locked first position toward its unlocked second position moves the pushrod over a first travel that actuates the opening of a first valve shutter (s) into an open position with the second bore section for the circuit, and the subsequent movement of the control lever (8) from its rest position toward its active position moves the pushrod over a second travel actuating the opening of the second valve shutter into a position in which the circuit is open with the first bore section.

15. Pressurized fluid reservoir comprising a valve according to any one of Claims 1 to 14.
